# FASCICULE DE BREVET EUROPEEN

(11) **EP 1 496 720 B1**
(45) Date de publication et mention de la délivrance du brevet: **14.09.2011**
(21) Numéro de dépôt: 04291591.8
(22) Date de dépôt: 23.06.2004
(51) Int. Cl.: H04Q 11/00

(54) **Réseau optique en anneau à protocole de remplissage de trous indépendant du débit**
Optisches Ringnetzwerk mit Löcherfüllungsprotokol unabhängig von der Übertragungsrate
Optical ring network with void filling protocol independent of the transmission rate

(30) Priorité: 11.07.2003 FR 0308518
(43) Date de publication de la demande: 12.01.2005
(73) Titulaire: Alcatel Lucent, 75008 Paris (FR)
(72) Inventeur: Zami, Thierry, 91300 Massy (FR); Le Sauze, Nicolas, 91440 Bures-sur-Yvette (FR); Dotaro, Emmanuel, 91370 Verrieres le Buisson (FR); Ciavaglia, Laurent, 77300 Fontainebleau (FR); Popa, Daniel, 92240 Malakoff (FR)
(74) Mandataire: Keseris, Denis

(56) Documents cités:
- EP-A- 0 462 349
- EP-A- 1 052 808
- US-A- 5 229 993
- US-A1- 2002 154 360
- LE SAUZE N ET AL: "A novel, low cost optical packet metropolitan ring architecture" ECOC 2001, vol. 6, 30 septembre 2001 (2001-09-30), pages 66-67, XP010582879 AMSTERDAM
- KYEONG SOO KIM ET AL: "Unslotted optical CSMA/CACprotocol with fairness control in metro WDM ring networks" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002, IEEE GLOBAL TELECOMMUNICATIONS CONFERENCE, NEW YORK, NY : IEEE, US, vol. VOL. 1 OF 3, 17 novembre 2002 (2002-11-17), pages 2370-2374, XP010636172 ISBN: 0-7803-7632-3
- LE SAUZE N ET AL: "A novel, low cost optical packet metropolitan ring architecture", OPTICAL COMMUNICATION, 2001. ECOC '01. 27TH EUROPEAN CONFERENCE ON SEPT. 30 - OCT. 4, 2001, PISCATAWAY, NJ, USA,IEEE, vol. 6, 30 September 2001 (2001-09-30), pages 66-67, XP010582879, ISBN: 978-0-7803-6705-0

## Description

L'invention concerne le domaine de la transmission de données dans les réseaux optiques, ces données étant véhiculées dans des liaisons optiques sous la forme de signaux optiques organisés en paquets.

L'invention peut s'appliquer notamment aux réseaux en anneau à multiplexage de longueurs d'onde (ou (D)WDM pour « (Dense) Wavelength Division Multiplexing »).

Certains réseaux du type précité, comme par exemple le réseau d'accès métropolitain dit "DBORN" (pour "Dual Bus Optical Ring Network"), comprennent des stations (ou noeuds) de communication couplé(e)s à au moins une fibre optique, adaptée à la transmission de paquets de signaux optiques multiplexés en longueur d'onde, et mettant en oeuvre un protocole de remplissage de trous (ou « void filling ») afin de gérer l'insertion des paquets en attente de transmission dans l'une de leurs mémoires. Un tel réseau est divulgué dans "A novel, low cost optical packet metropolitan ring architecture" N. Le Sanze et al., Optical Communication 2001 ECOC' 01.

On entend ici par « trou » un emplacement vide, c'est-à-dire dépourvu de paquet, au sein d'une rafale (ou « burst ») de paquets de signaux optiques.

La mise en oeuvre de ce protocole repose sur l'observation du trafic correspondant à chaque longueur d'onde au sein de la fibre optique de transmission, combinée à l'utilisation d'une ligne à retard optique (ou « Delay Fiber Line ») insérée dans la liaison optique.

L'observation s'effectue généralement à l'aide de photodiodes dédiées chacune à l'une des longueurs d'onde de travail de la station considérée et délivrant à un module de contrôle des signaux de détection représentatifs, généralement, de la largeur temporelle des trous.

La ligne à retard optique placée entre les photodiodes et les émetteurs de la station permet de retarder les paquets en transit pendant le temps de traitement des signaux de détection.

Le traitement des signaux de détection par le module de contrôle consiste à déterminer la largeur temporelle du trou détecté et la longueur d'onde associée, puis à déterminer si cette largeur temporelle peut permettre l'insertion de l'un des paquets en attente de transmission, et dans l'affirmative pour organiser l'insertion, par le module d'émission de sa station, de ce paquet selon la longueur d'onde associée au trou détecté.

Les lignes à retard optique qui équipent les stations du réseau présentent une longueur choisie de manière à permettre aux stations d'insérer les paquets les plus longs que le réseau peut traiter. Par exemple dans un réseau à protocole Ethernet les paquets les plus longs comportent environ 1500 octets. On crée ainsi une fenêtre glissante, de largeur temporelle correspondant à la longueur maximale des paquets, qui permet d'éviter les collisions entre paquets.

L'inconvénient de ce type de protocole de remplissage de trous est que la longueur de la ligne à retard impose une durée maximale d'insertion des paquets qui correspond à une taille de paquets proportionnelle au débit de transmission. Par conséquent, pour une taille de paquets donnée, plus le débit est faible, plus la taille des lignes à retard optique doit être grande, ce qui peut entraîner une augmentation significative de la longueur totale de la liaison et donc augmenter le coût du réseau.

L'invention a donc pour but d'améliorer la situation.

Elle propose à cet effet un procédé de transmission de paquets au sein d'un réseau optique comportant au moins deux stations propres à insérer temporellement dans une fibre optique, entre des paquets en transit émis par au moins une autre station placée en amont, des paquets de signaux optiques portés par au moins une longueur d'onde commune et selon un sens de propagation commun, caractérisé en ce qu'il consiste i) à transmettre auxdites stations des signaux de synchronisation représentatifs d'un début d'au moins une session d'émission de durée choisie, et ii) à autoriser chaque station pendant chaque session à insérer dans ladite fibre optique un paquet en attente, selon ladite longueur d'onde, d'une part lorsque ladite station ne détecte pendant une session en cours aucun paquet en transit selon cette longueur d'onde pendant une durée supérieure à une durée seuil choisie, et d'autre part lorsque la durée restant entre la fin du dernier paquet en transit et la fin de cette session en cours est supérieure à la durée nécessaire à l'insertion dudit paquet en attente dans ladite fibre optique, et en ce qu'en cas d'insertion, celle-ci débute après un intervalle de temps, compté à partir de la fin du dernier paquet en transit, qui est inférieur à ladite durée de seuil.

Préférentiellement, on synchronise l'horloge interne de chaque station sur chaque signal de synchronisation.

La transmission des signaux de synchronisation s'effectue préférentiellement de façon périodique. La période peut alors être égale à la durée d'une session d'émission, ou plus généralement égale à n fois la durée d'une session d'émission, n étant un entier supérieur ou égal à un.

Par ailleurs, il est utile de définir dans le réseau deux type de stations (ou de fonctionnements de station). Une station située le plus en amont par rapport audit sens de propagation commun émettant des paquets selon ladite longueur d'onde commune sera dite "station maître" pour cette longueur d'onde commune. Toute autre station opérant selon cette longueur d'onde commune étant alors sera dite "station esclave" pour ladite longueur d'onde commune.

Ainsi, selon un autre aspect de l'invention, il est particulièrement avantageux que les signaux de synchronisation soient transmis aux stations esclaves par la station maître.

Préférentiellement, la durée seuil est choisie inférieure à environ 100 nanosecondes (ns), et plus préférentiellement inférieure à environ 25 ns.

L'invention porte en outre sur une station de communication (ou noeud), pour un réseau optique, ladite station étant propre à insérer temporellement dans une fibre optique, entre des paquets en transit émis par au moins une autre station placée en amont, des paquets de signaux optiques portés par au moins une longueur d'onde commune et selon un sens de propagation commun.

Cette station se caractérise par le fait qu'elle comprend :
i) des moyens de détection optique propres à observer dans ladite fibre optique le trafic associé à ladite longueur d'onde de manière à délivrer des signaux de détection représentatifs de l'absence de paquet selon ladite longueur d'onde pendant une durée supérieure à une durée seuil choisie, et
ii) des moyens de contrôle agencés, en cas de réception d'un signal de détection, postérieurement à la réception d'un signal de synchronisation représentatif du début d'au moins une session d'émission de durée choisie, pour déterminer la durée restant entre la fin du dernier paquet en transit pendant une session en cours et la fin de cette session en cours, puis autoriser l'insertion dans ladite fibre optique d'un paquet en attente de transmission, lorsque ladite durée restante est supérieure à la durée nécessaire à l'insertion du paquet en attente de transmission dans la fibre optique.

La station comprend en outre des moyens d'émission couplés optiquement à ladite fibre optique de manière à y insérer sur ordre desdits moyens de contrôle un paquet en attente de transmission, ladite insertion débutant après un intervalle de temps, compté à partir de la fin du dernier paquet en transit, qui est inférieur à ladite durée de seuil.

La station selon l'invention peut présenter d'autres caractéristiques qui pourront être prises séparément ou en combinaison, et notamment :
- des moyens de contrôle agencés de manière à synchroniser une horloge interne de leur station sur chaque signal de synchronisation, et à déduire d'un signal de synchronisation une fin de session d'émission,
- lorsque la station est une station maître pour la longueur d'onde commune, elle peut comprendre des moyens de synchronisation chargés de gérer l'émission des signaux de synchronisation, par exemple sous la forme de paquets dédiés, à destination des stations esclaves. L'émission est alors préférentiellement périodique, la période étant égale à n fois la durée d'une session d'émission, n étant un entier supérieur ou égal à un,
- des moyens de réception couplés optiquement à la fibre optique en amont ou en aval des moyens de détection et en amont ou en aval des moyens d'émission, et chargés d'extraire de cette fibre des paquets selon chaque longueur d'onde détectée,
- une ligne à retard couplée optiquement à la fibre optique entre les moyens de détection et les moyens d'émission,
- des moyens de détection comportant des photodiodes en nombre égal au nombre de longueurs d'onde à détecter.

L'invention propose également un réseau en anneau, par exemple à multiplexage de longueurs d'onde, tel qu'un réseau d'accès métropolitain, équipé d'au moins deux stations de communication du type de celles présentées ci-avant.

D'autres caractéristiques et avantages de l'invention apparaîtront à l'examen de la description détaillée ci-après, et des dessins annexés, sur lesquels :
- la figure 1 illustre de façon schématique un exemple de réalisation d'un réseau de communications en anneau raccordé à un réseau fédérateur,
- la figure 2 illustre de façon schématique un premier exemple de réalisation d'une station de communication selon l'invention,
- la figure 3 illustre de façon schématique un second exemple de réalisation d'une station de communication selon l'invention,
- la figure 4 illustre de façon schématique un premier exemple de rafale de paquets conforme au protocole de remplissage de trous selon l'invention, et
- la figure 5 illustre de façon schématique un second exemple de rafale de paquets conforme au protocole de remplissage de trous selon l'invention.

Les dessins annexés pourront non seulement servir à compléter l'invention, mais aussi contribuer à sa définition, le cas échéant.

L'invention a pour objet de permettre le remplissage optimisé des rafales d'émission associées à au moins une longueur d'onde commune au sein d'un réseau.

Dans ce qui suit, on considère que le réseau est en anneau et à multiplexage de longueurs d'onde (ou (D)WDM pour « (Dense) Wavelength Division Multiplexing ») comme le réseau d'accès métropolitain de télécommunications, de type DBORN. Mais, l'invention n'est pas limitée à cette seule application. Elle concerne également les réseaux à "medium" partagé, également connus sous le nom de réseaux à accès multiples.

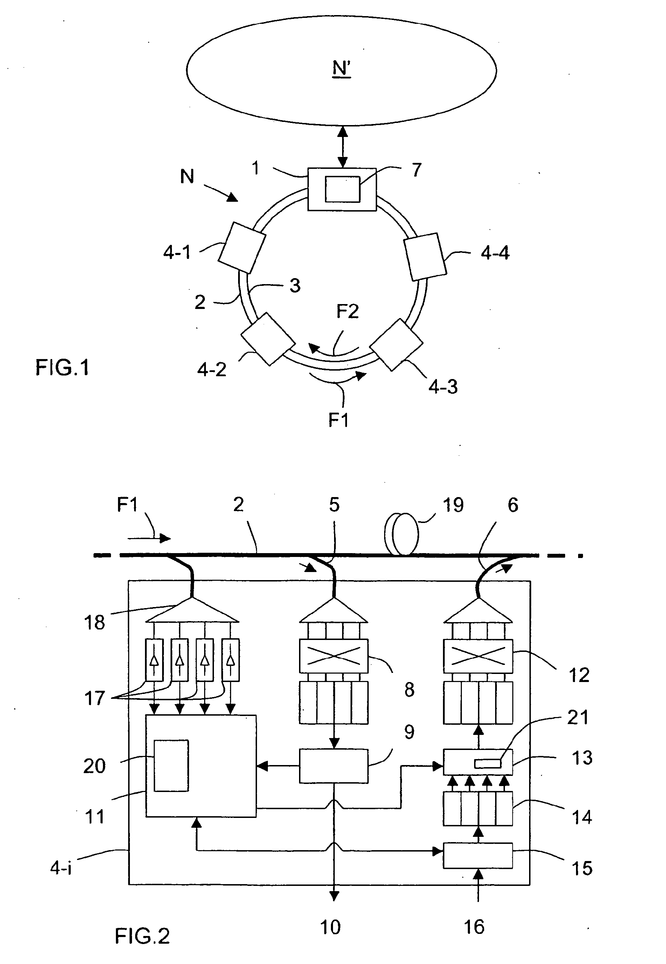

Le réseau en anneau N illustré sur la figure 1 comporte, classiquement, un noeud d'accès (ou hub, ou encore point de présence) 1, auquel est raccordée l'une au moins des deux extrémités de fibres optiques 2, 3 destinées à la transmission de données sous forme de signaux optiques, et plusieurs stations d'utilisateurs 4-i (ici, i = 1 à 4 ; ce nombre n'est en aucune façon limité à quatre, il s'agit d'un nombre entier positif supérieur à deux (2)), couplées optiquement aux fibres 2, 3, via des moyens de couplage 5, 6 qui seront décrits plus loin en référence à la figure 2.

Le réseau en anneau N est généralement raccordé à un autre réseau, dit « fédérateur » (ou « backbone ») N', via le noeud d'accès 1.

Comme mentionné ci-dessus, le réseau N comporte préférentiellement une première fibre optique 2 dédiée au trafic montant des stations 4-i vers le noeud d'accès 1 (flèche F1), et une seconde fibre optique 3 dédiée au trafic descendant du noeud d'accès 1 vers les stations 4-i (flèche F2). Mais, on peut envisager un réseau N simplifié dans lequel on ne prévoit qu'une unique fibre dédiée aux deux types de trafic (montant et descendant). Par ailleurs, on peut également envisager que le réseau N comporte au moins une autre fibre optique dédiée à la protection du trafic en cas de défaillance survenue sur les première 2 et seconde 3 fibres optiques.

Le noeud d'accès 1, qui est de préférence de type électronique, comporte des moyens de mémorisation, tels que des mémoires électroniques, destinés à mémoriser le trafic, au moins de façon temporaire, et un commutateur électronique 7, de type Ethernet ou IP, équipé de moyens de conversion de type O/E/O (« Optique / Electrique / Optique ») de façon à pouvoir accéder à l'intégralité du trafic circulant dans l'anneau. Un tel commutateur électronique 7 est généralement appelé « concentrateur ».

Il est par ailleurs rappelé que dans un réseau en anneau N, de type DBORN, les stations 4-i ne peuvent pas dialoguer entre elles directement. Lorsqu'elles souhaitent dialoguer entre elles, elles doivent tout d'abord transmettre leurs données (paquets de signaux optiques), via la première fibre 2, au noeud d'accès 1, qui se charge de les retransmettre à la station concernée via la seconde fibre 3. Par conséquent, dans ce type de réseau en anneau, le mécanisme de remplissage selon l'invention, qui va être décrit ci-après, ne s'applique qu'à la première fibre 2 dédiée au trafic montant.

On se réfère maintenant à la figure 2 pour décrire une station de communication 4-i, selon l'invention.

Dans l'exemple de réalisation illustré, la station 4-i n'est couplée qu'à la première fibre 2 afin de ne pas surcharger les connexions. Mais, son couplage à la seconde fibre 3 (illustrée sur la figure 1) est sensiblement identique à celui de la première fibre 2. Par ailleurs, on considère ici, à titre illustratif que les quatre stations du réseau de la figure 1 utilisent un même jeu de quatre longueurs d'onde λ1 à λ4. Mais, bien entendu, il pourrait en être autrement. Pour mettre en oeuvre l'invention il faut en effet que les stations partagent, par groupes d'au moins deux, au moins une longueur d'onde commune.

La station 4-i comporte tout d'abord un module de réception 8 couplé à la première fibre optique 2 par un coupleur optique passif 5, de type 2x1. Ici, le module de réception 8 est plus précisément constitué d'un démultiplexeur alimentant un commutateur, qui alimente lui-même quatre récepteurs dédiés chacun à l'une des quatre longueurs d'onde. Ces quatre récepteurs sont couplés à un circuit 9 de traitement de paquets extraits alimentant, d'une part, une sortie 10, par exemple couplée à un terminal, et d'autre part, un module de contrôle 11 de la station 4-i, sur lequel on reviendra plus loin.

La station 4-i comporte également un module d'émission 12 couplé à la première fibre optique 2 par un coupleur optique passif 6, de type 1x2. Ici, le module d'émission 12 est plus précisément constitué de quatre sources de signaux optiques, telles que par exemple à base de lasers, délivrant des ondes porteuses de quatre longueurs d'onde différentes λ1 à λ4 et modulées de façon à former les paquets de signaux optiques à transmettre dans la première fibre 2, d'un commutateur alimenté par les sources, et d'un multiplexeur alimenté par le commutateur et alimentant le coupleur passif 6.

Les sources du module d'émission 12 sont alimentées en signaux optiques par un circuit électronique 13 chargé, d'une part, de lire les contenus de mémoires 14, de préférence de type FIFO, selon des rythmes définis par des commandes provenant du module de contrôle 11, et d'autre part, d'adapter le format des paquets lus dans les mémoires 14 avant de les communiquer auxdites sources de lumière. Les mémoires 14 sont par ailleurs alimentées en paquets par un module d'alimentation 15, lui même alimenté par une entrée 16, par exemple couplée au terminal précité, et par le module de contrôle 11.

La station 4-i comporte également un module de détection constitué, ici, de quatre détecteurs 17, chargés chacun d'observer le trafic sur l'une des quatre longueurs d'onde λ1 à λ4 sur la première fibre optique 2 afin de délivrer au module de contrôle 11 des signaux de détection représentatifs d'une absence (ou présence) de paquets dans le trafic observé pendant une durée supérieure à une durée seuil DS. En d'autres termes, chaque détecteur 17 est agencé pour délivrer des signaux signalant un trou dans le trafic qu'il observe sur l'une des quatre longueurs d'onde.

Chaque détecteur 17 est donc couplé par un ensemble 18, constitué d'un coupleur de type 1x2 suivi d'un démultiplexeur de longueurs d'onde, à la première fibre optique 2, en amont des coupleurs passifs 5 et 6. Préférentiellement, chaque détecteur 17 est une photodiode.

Enfin, la station 4-i est associée à une ligne à retard optique 19 qui est insérée dans la première fibre optique 2 entre les deux coupleurs passifs 18 et 6 des modules de détection 17 et d'émission 12. Plus précisément, dans l'exemple illustré sur la figure 2, la ligne à retard optique 19 est couplée à la première fibre optique 2 entre les deux coupleurs passifs 5 et 6 des modules de réception 8 et d'émission 12.

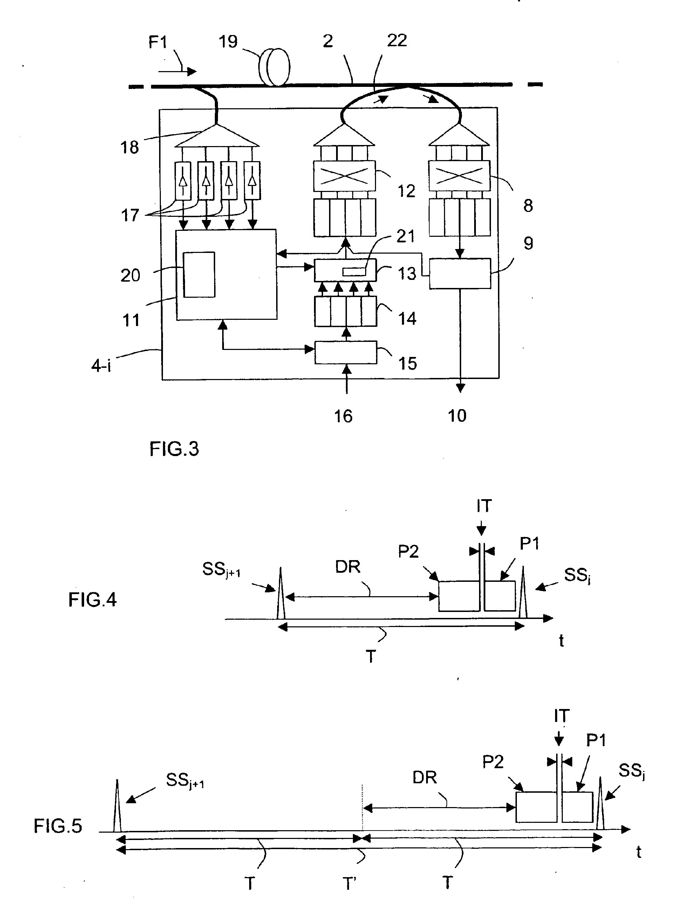

Dans une variante de réalisation avantageuse, illustrée sur la figure 3, les modules d'émission 12 et de réception 8 sont couplés à la première fibre optique 2 par un unique coupleur 22, de type 2x2. La ligne à retard optique 19 est alors couplée à la première fibre optique 2 entre les deux coupleurs passifs 18 et 22.

Les lignes à retard optique 19 qui équipent les stations 4-i du réseau en anneau N présentent une longueur adaptée au temps de traitement nécessaire au module de contrôle 11 et à une durée seuil DS, mais indépendante du débit du réseau, pour des raisons qui vont être exposées ci-après.

Selon l'invention, à chaque longueur d'onde λ1 à λ4, commune aux stations 4-i, est associé un signal de synchronisation SSⱼ qui est transmis dans la première fibre optique 2 à destination desdites stations.

Préférentiellement, les signaux de synchronisation sont générés par certaines stations dites stations maîtres. Plus précisément, on appelle station maître pour une longueur d'onde commune considérée, la station qui émet la plus en amont du noeud d'accès 1, dans la première fibre 2, des paquets selon cette longueur d'onde commune. Les autres stations qui sont plus proches du noeud d'accès et qui opèrent selon la longueur d'onde commune sont alors dites stations esclaves pour cette longueur d'onde commune.

Ainsi, dans l'exemple illustré sur la figure 1, la station 4-1 est la station maître pour les quatre longueurs d'onde λ1 à λ4 qui sont communes aux quatre stations 4-i, du fait qu'elle est la plus éloignée du noeud d'accès 1 vis-à-vis du trafic montant (flèche F1). Les stations 4-2, 4-3 et 4-4 sont donc ici des stations esclaves pour les quatre longueurs d'onde λ1 à λ4 communes. Bien entendu, il pourrait en être autrement, notamment dans un réseau en anneau comportant beaucoup plus de stations, plusieurs stations pouvant être maître pour des longueurs d'onde différentes et donc également esclave pour d'autres longueurs d'onde.

Un signal de synchronisation SSⱼ est préférentiellement un paquet dédié injecté dans la première fibre optique 2, selon une longueur d'onde commune, par le module d'émission 12 de la station 4-1, maître pour cette longueur d'onde commune. Plus précisément, on prévoit un module de synchronisation 21, préférentiellement implanté dans le circuit électronique 13, et chargé de générer des paquets de synchronisation (dédiés) qu'il transmet au module d'émission 12 en lui précisant la longueur d'onde à utiliser. Cette génération de paquet de synchronisation est préférentiellement périodique. Elle peut être éventuellement supervisée par le module de contrôle 11 de la station maître 4-1. La périodicité est définie par rapport à une horloge interne (non représentée) couplée à l'horloge de cadencement de la station maître 4-1.

Deux types de périodicité peuvent être envisagés : une périodicité « simple », illustrée sur la figure 4, et une périodicité « complexe », illustrée sur la figure 5.

La périodicité simple consiste à définir pour la longueur d'onde commune considérée une session d'émission entre deux paquets de synchronisation successifs SSⱼ et SSⱼ₊₁, séparés par une période T. On entend ici par « session d'émission » une phase de durée T pendant laquelle chaque station 4-i opérant selon la longueur d'onde commune considérée peut insérer dans le trafic associé à cette longueur d'onde commune, si elle le souhaite et si elle le peut, un paquet en attente de transmission dans ses mémoires 14. Par conséquent une session d'émission de durée T est associée à une rafale (ou « burst ») d'émission.

La périodicité complexe consiste à définir pour la longueur d'onde commune considérée n sessions d'émission entre deux paquets de synchronisation successifs SSⱼ et SSⱼ₊₁, séparés par une période T', chaque session d'émission présentant une durée fixe T, et n étant un entier supérieur ou égal à deux (2). Dans l'exemple illustré sur la figure 5, la période de durée T' entre paquets de synchronisation successifs est égale à 2T. En d'autres termes, deux sessions d'émission prennent ici place entre deux paquets de synchronisation successifs.

Le module de contrôle 11 de chaque station 4-i est configuré en fonction du type de périodicité choisi. Plus précisément, chaque module de contrôle 11 dispose d'un module de traitement 20 couplé à des horloges internes (une pour chaque longueur d'onde commune), elles-mêmes couplées à l'horloge de cadencement de la station, et mémorisant soit seulement la durée de la période T entre deux paquets de synchronisation successifs SSⱼ et SSⱼ₊₁, soit la durée de la période T' entre deux paquets de synchronisation successifs SSⱼ et SSⱼ₊₁ et la durée de la session d'émission T.

Préférentiellement, chaque signal de synchronisation SSⱼ sert à synchroniser l'ensemble des horloges internes des modules de traitement 20 des stations 4-i concernées, pour une longueur d'onde considérée.

Lorsque l'un des détecteurs 17 de l'une des stations esclaves, par exemple la station 4-4, détecte le paquet de synchronisation SSⱼ il en avertit immédiatement le module de traitement 20 du module de contrôle 11. Le module de contrôle 11 se synchronise alors sur ce paquet de synchronisation qui l'avertit du début de la session en cours. Puis, il se met en attente de signaux de détection en provenance des détecteurs 17.

Tant que les détecteurs 17 observent des paquets sur leur longueur d'onde de détection, il ne se passe rien. En revanche, si l'un des détecteurs 17 détecte un trou, c'est-à-dire une absence de paquet sur la rafale d'émission présentant sa longueur d'onde de détection, il en avertit le module de traitement 20.

Par définition, un trou correspond à une durée d'observation sans paquet supérieure à une durée seuil choisie DS. Préférentiellement, la durée seuil DS est choisie inférieure à environ 100 nanosecondes (ns), et plus préférentiellement inférieure à environ 25 ns, par exemple 20 ns.

Cette durée seuil DS définit en fait un temps de garde entre paquets successifs émis sur une longueur d'onde commune par des stations différentes.

Ainsi, dès qu'un détecteur 17 constate qu'aucun paquet (non dédié à la synchronisation) ne circule dans la première fibre optique 2, avec sa longueur d'onde de détection, pendant une durée supérieure à la durée seuil DS, il adresse au module de traitement 20 un signal de détection. A la réception de ce signal de détection, le module de traitement 20 en déduit, du fait de sa synchronisation, la durée DR restant avant la fin de la session en cours. Il sait en effet quand a débuté la session en cours, grâce au dernier signal de synchronisation reçu, et à quel instant il a reçu le signal de détection, et connaît en plus la durée T d'une session.

Connaissant précisément la durée DR restant avant la fin de la session en cours, le module de traitement 20 peut alors en déduire la taille maximale du paquet qu'il peut insérer dans la rafale d'émission associée à la session en cours. Il n'a plus ensuite qu'à déterminer en coopération avec le circuit électronique d'émission 13 s'il existe en tête de la file d'attente des mémoires 14 un paquet dont la taille est inférieure à cette taille maximale, et si tel est le cas, à ordonner au circuit électronique d'émission 13 d'extraire ledit paquet des mémoires 14 et de le transmettre au module d'émission 12 afin qu'il l'insère dans la première fibre optique 2, selon la longueur d'onde objet de la détection de trou, dans la rafale d'émission présentant cette longueur d'onde et retardée dans la ligne à retard optique 19.

Le paquet est alors inséré dans la rafale d'émission de la session en cours, après le dernier paquet émis par l'une des stations précédentes, en ménageant un intervalle de temps IT inférieur à la durée seuil DS. Dans l'exemple illustré sur la figure 4, la rafale d'émission comporte, avant l'insertion par la station 4-4, un premier paquet P1 inséré, par exemple, par la première station 4-1 juste après le paquet de synchronisation SSⱼ et un second paquet P2 inséré, par exemple, par la troisième station 4-3, juste après le premier paquet P1. Par conséquent, la quatrième station 4-4 peut insérer son paquet après le second paquet P2.

Le module de traitement 20 et le module de synchronisation 21 selon l'invention peuvent être réalisés sous la forme de circuits électroniques, de modules logiciels (ou informatiques), ou d'une combinaison de circuits et de logiciels.

L'invention offre également un procédé de transmission de paquets applicable au sein d'un réseau optique en anneau N à multiplexage de longueurs d'onde.

Celui-ci peut être notamment mis en oeuvre à l'aide du réseau en anneau N et des stations de communication 4-i présentés ci-avant. Les fonctions et sous-fonctions principales et optionnelles assurées par les étapes de ce procédé étant sensiblement identiques à celles assurées par les différents moyens constituant le réseau N et/ou les stations de communication 4-i, seules seront résumées ci-après les étapes mettant en oeuvre les fonctions principales du procédé selon l'invention.

Ce procédé consiste tout d'abord à transmettre aux stations 4-i des signaux de synchronisation, par exemple sous la forme de paquets dédiés, représentatifs du début d'au moins une session d'émission de durée T choisie, puis à permettre à chaque station 4-i, durant une session en cours, d'insérer dans la fibre optique 2 un paquet en attente de transmission, selon la longueur d'onde commune, d'une part lorsque la station 4-i ne détecte aucun paquet selon cette longueur d'onde commune pendant une durée de la session en cours supérieure à une durée seuil DS choisie, et d'autre part lorsque la durée DR restant avant la fin de cette session en cours est supérieure à la durée nécessaire à l'insertion du paquet en attente dans la fibre 2.

En cas d'insertion effective, celle-ci débute après un intervalle de temps IT, compté à partir de la fin du dernier paquet en transit, qui doit être inférieur à la durée de seuil DS. Cette dernière disposition garantit que le même procédé pourra s'appliquer pour chaque station situé en aval.

L'invention ne se limite pas aux modes de réalisation de station de communication, de réseau en anneau et de procédé de transmission décrits ci-avant, seulement à titre d'exemple, mais elle englobe toutes les variantes que pourra envisager l'homme de l'art dans le cadre des revendications ci-après.

Ainsi, dans ce qui précède on a décrit un réseau en anneau dans lequel les signaux de synchronisation, relatifs au trafic selon une longueur d'onde, étaient générés par la station maître pour cette longueur d'onde. Mais, on peut envisager que le réseau comprenne un équipement dédié à la synchronisation et placé en amont de la station la plus amont par rapport au noeud d'accès. Dans ce cas, aucune station ne dispose de module de synchronisation, ce qui veut dire que la différenciation entre station maître et station esclave n'existe plus.

D'une façon générale, le procédé et les stations selon l'invention peuvent s'appliquer à tout type de réseau où au moins une liaison optique est couplée à des stations émettrices réparties le long de la liaison, ces stations étant prévues pour insérer des paquets parmi des paquets en transit émis par des stations placée en amont et selon un sens de propagation commun.

## Revendications

1. Procédé de transmission de paquets au sein d'un réseau optique (N) comportant au moins deux stations (4-i) propres à insérer temporellement dans une fibre optique (2), entre des paquets en transit émis par au moins une autre station placée en amont, des paquets de signaux optiques portés par au moins une longueur d'onde commune et selon un sens de propagation commun, **caractérisé en ce qu'**il consiste i) à transmettre auxdites stations (4-i) des signaux de synchronisation représentatifs d'un début d'au moins une session d'émission de durée choisie, et ii) à autoriser chaque station (4-i) pendant chaque session à insérer dans ladite fibre optique (2) un paquet en attente, selon ladite longueur d'onde, d'une part lorsque ladite station ne détecte pendant une session en cours aucun paquet en transit selon cette longueur d'onde pendant une durée supérieure à une durée seuil (DS) choisie, et d'autre part lorsque la durée (DR) restant entre la fin du dernier paquet en transit et la fin de cette session en cours est supérieure à la durée nécessaire à l'insertion dudit paquet en attente dans ladite fibre optique (2), et **en ce qu'**en cas d'insertion, celle-ci débute après un intervalle de temps (IT), compté à partir de la fin du dernier paquet en transit, qui est inférieur à ladite durée de seuil (DS).

2. Procédé selon la revendication 1, **caractérisé en ce que** l'on synchronise une horloge interne de chaque station (4-i) sur chaque signal de synchronisation.

3. Procédé selon l'une des revendications 1 et 2, **caractérisé en ce que** l'on transmet auxdites stations (4-i) un signal de synchronisation de façon périodique, ladite période (T') étant égale à n fois la durée (T) d'une session d'émission, n étant un entier supérieur ou égal à un.

4. Procédé selon l'une des revendications 1 à 3, **caractérisé en ce qu'**une dite station (4-1) située le plus en amont par rapport audit sens de propagation commun émettant des paquets selon ladite longueur d'onde commune étant dite station maître pour cette longueur d'onde commune, chaque autre dite station opérant selon cette longueur d'onde commune étant alors dite station esclave pour ladite longueur d'onde commune, lesdits signaux de synchronisation sont transmis auxdites stations esclaves par ladite station maître.

5. Procédé selon l'une des revendications 1 à 4, **caractérisé en ce que** ledit signal de synchronisation est un paquet dédié.

6. Station de communication (4-i) pour un réseau optique (N), ladite station étant propre à insérer temporellement dans une fibre optique (2), entre des paquets en transit émis par au moins une autre station placée en amont, des paquets de signaux optiques portés par au moins une longueur d'onde commune et selon un sens de propagation commun, **caractérisée en ce qu'**elle comporte i) des moyens de détection optique (17) propres à observer dans ladite fibre optique (2) le trafic associé à ladite longueur d'onde de manière à délivrer des signaux de détection représentatifs de l'absence de paquet selon ladite longueur d'onde pendant une durée supérieure à une durée seuil (DS) choisie, et ii) des moyens de contrôle (11) agencés, en cas de réception d'un signal de détection, postérieurement à la réception d'un signal de synchronisation représentatif du début d'au moins une session d'émission de durée (T) choisie, pour déterminer la durée (DR) restant entre la fin du dernier paquet en transit pendant une session en cours et la fin de cette session en cours, puis autoriser l'insertion dans ladite fibre optique (2) d'un paquet en attente de transmission, lorsque ladite durée (DR) restante est supérieure à la durée nécessaire à l'insertion du paquet en attente de transmission dans la fibre optique (2), et **en ce qu'**elle comprend des moyens d'émission (12) couplés optiquement à ladite fibre optique (2) de manière à y insérer sur ordre desdits moyens de contrôle (11) un paquet en attente de transmission, ladite insertion débutant après un intervalle de temps (IT), compté à partir de la fin du dernier paquet en transit, qui est inférieur à ladite durée de seuil (DS).

7. Station selon la revendication 6, **caractérisée en ce que** lesdits moyens de contrôle (11) sont agencés pour synchroniser une horloge interne de leur station sur chaque signal dé synchronisation, et pour déduire d'un signal de synchronisation une fin de session d'émission.

8. Station selon l'une des revendications 6 et 7, une dite station (4-1) située le plus en amont par rapport audit sens de propagation commun émettant des paquets selon ladite longueur d'onde commune étant dite station maître pour cette longueur d'onde commune, chaque autre dite station opérant selon cette longueur d'onde commune étant alors dite station esclave pour ladite longueur d'onde commune, **caractérisée en ce que** lorsqu'elle est maître ladite station comprend des moyens de synchronisation (21) agencés pour gérer l'émission lesdits signaux de synchronisation à destination desdites stations esclaves.

9. Station selon la revendication 8, **caractérisée en ce que** lesdits moyens de synchronisation (21) sont agencés pour émettre lesdits signaux de synchronisation de façon périodique, ladite période (T') étant égale à n fois la durée d'une session d'émission (T), n étant un entier supérieur ou égal à un.

10. Station selon l'une des revendications 8 et 9, **caractérisée en ce que** lesdits moyens de synchronisation (21) sont agencés pour émettre lesdits signaux de synchronisation sous la forme de paquets dédiés.

11. Station selon l'une des revendications 6 et 10, **caractérisée en ce qu'**elle comprend une ligne à retard optique (19) couplée optiquement à ladite fibre optique (2) entre lesdits moyens de détection (17) et lesdits moyens d'émission (12).

12. Réseau optique en anneau (N), **caractérisé en ce qu'**il comporte un noeud d'accès (1) et au moins deux stations (4-i) selon l'une des revendications 6 à 11 couplés à au moins une fibre optique (2).

## Claims

1. A method for transmitting packets within an optical network (N) comprising at least two stations (4-i) capable of inserting in time within an optical fiber (2), between packets in transit emitted by at least one other station located upstream, optical signal packets carried by at least one shared wavelength along a shared direction of propagation, **characterized in that** it consists i) of transmitting to said stations (4-i) of the synchronization signals representative of the start of at least one emission session of a chosen duration, and ii) of authorizing each station (4-i) during each session to insert a queued packet within said optical fiber (2), along said wavelength, firstly when said station does not detect any packets in transit on that wavelength during an ongoing session for a period of time longer than a chosen threshold period (DS), and secondly whenever the remaining period of time (DR) between the end of the last packet in transit and the end of that ongoing session is longer than the period of time needed to insert said queued packet into said optical fiber (2), and **in that** if insertion is to occur, this insertion begins after an interval of time (IT) counted from the end of the last packet in transit, which is shorter than said threshold period (DS).

2. A method according to claim 1, **characterized in that** an internal clock of each station (4-i) is synchronized to each synchronization signal.

3. A method according to one of the claims 1 and 2, **characterized in that** a synchronization signal is transmitted to said stations (4-i) periodically, said period (T') being equal to n times the duration (T) of an emission session, n being a whole number greater than or equal to one.

4. A method according to one of the claims 1 to 3, **characterized in that** a said station (4-1) located the most upstream along said shared direction of propagation emitting packets along said shared wavelength being known as a master station for that shared wavelength, and each other said station operating along that shared wavelength being accordingly known as a slave station for said shared wavelength, said synchronization signals are transmitted to said slave stations by said master station.

5. A method according to one of the claims 1 to 4, **characterized in that** said synchronization signal is a dedicated packet.

6. A communication station (4-i) for an optical network (N), said station being capable of inserting in time within an optical fiber (2), between packets in transit emitted by at least one other station located upstream, optical signal packets carried by at least one shared wavelength along a shared direction of propagation, **characterized in that** it comprises i) optical detection means (17) capable of observing within said optical fiber (2) the traffic associated with said wavelength so as to deliver detection signals representative of the absence of packets along said wavelength during a period of time longer than a chosen threshold period (DS), and ii) control means (11) configured, in the event that a detection signal is received, subsequent to the receipt of a synchronization signals representative of the start of at least one emission session of a chosen period of time (T), to determine the remaining period (DR) between the end of the last packet in transit during an ongoing session and the end of that ongoing session, then to authorize the insertion into said optical fiber (2) of a packet queued for transmission, whenever said remaining period (DR) is longer than the duration needed to insert the packet queued for transmission into the optical fiber (2), and **in that** it comprises emission means (12) optically coupled to said optical fiber (2) so as to insert therein upon the order of said control means (11) a packet queued for transmission, said insertion beginning after an interval of time (IT) counted from the end of the last packet in transit, which is shorter than said threshold period (DS).

7. A station according to claim 6, **characterized in that** said control means (11) are configured to synchronize an internal clock of their station to each synchronization signal, and to deduce an emission session ending based on a synchronization signal.

8. A station according to one of the claims 6 and 7, a said station (4-1) located the most upstream along said shared direction of propagation emitting packets along said shared wavelength being known as a master station for that shared wavelength, and each other said station operating along that shared wavelength being accordingly known as a slave station for said shared wavelength, **characterized in that** whenever it is a master, said station comprises synchronization means (21) configured to manage the emission of said synchronization signals to said slave stations.

9. A station according to claim 8, **characterized in that** said synchronization means (21) are configured to emit said synchronization signals periodically, said period (T') being equal to n times the duration (T) of an emission session, n being a whole number greater than or equal to one.

10. A station according to one of the claims 8 and 9, **characterized in that** said synchronization means (21) are configured to emit said synchronization signals in the form of dedicated packets.

11. A station according to one of the claims 6 and 10, **characterized in that** it comprises an optical delay line (19) optically coupled to said optical fiber (2) between said detection means (17) and said emission means (12).

12. A ring-shaped optical network (N), **characterized in that** it comprises an access node (1) and at least two stations (4-i) according to one of claims 6 to 11 coupled to at least one optical fiber (2).

## Patentansprüche

1. Verfahren zum Übertragen von Paketen innerhalb eines optischen Netzwerks (N) mit mindestens zwei Stationen (4-i), die dazu geeignet sind, Pakete mit optischen Signalen, die von mindestens einer gemeinsamen Wellenlänge und gemäß einer gemeinsamen Ausbreitungsrichtung transportiert werden, zwischen von mindestens einer anderen, stromaufwärts gelegenen Station ausgegebenen Durchgangspaketen temporal in eine optische Faser (2) einzufügen, **dadurch gekennzeichnet, dass** es darin besteht i) Synchronisationssignale, die für einen Anfang mindestens einer Sendesitzung einer gewählten Dauer repräsentativ sind, an die besagten Stationen (4-i) zu übertragen, und ii) jede Station (4-i) während jeder Sitzung zuzulassen, dass ein Wartepaket, gemäß der besagten Wellenlänge, in die besagte optische Faser (2) eingefügt wird, einerseits, wenn die besagte Station während einer laufenden Sitzung kein Durchgangspaket gemäß dieser Wellenlänge während einer Dauer, die einen gewählten Grenzwert der Dauer (DS) überschreitet, erkennt, und, andererseits, wenn die zwischen dem Ende des letzten Durchgangspakets und dem Ende dieser laufenden Sitzung verbleibende Dauer (DR) die für das Einfügen des besagten Wartepakets in die besagte optische Faser (2) erforderliche Dauer überschreitet, und dass im Fall des Einfügens das besagte Einfügen nach einem Zeitintervall (IT), berechnet ab dem Ende des letzten Durchgangspakets, welches unter dem besagten Grenzwert der Dauer (DS) liegt, beginnt.

2. Verfahren nach Anspruch 1, **dadurch gekennzeichnet, dass** man einen internen Taktgeber einer jeden Station (4-1) gemäß jedem Synchronisationssignal synchronisiert.

3. Verfahren nach einem der Ansprüche 1 und 2, **dadurch gekennzeichnet, dass** man periodisch ein Synchronisationssignal an die besagten Stationen (4-i) aussendet, wobei die besagte Periode (T') gleich n-mal die Dauer (T) einer Sendesitzung ist, wobei n ganzzahlig und gleich oder größer als eins ist.

4. Verfahren nach einem der Ansprüche 1 bis 3, **dadurch gekennzeichnet, dass** eine besagte Station (4-1), welche im Verhältnis zur gemeinsamen Ausbreitungsrichtung am weitesten stromaufwärts gelegen ist und Pakete gemäß der besagten gemeinsamen Wellenlänge ausgibt, als Master-Station für diese gemeinsame Wellenlänge bezeichnet wird, wobei jede andere besagte Station, welche gemäß dieser gemeinsamen Wellenlänge arbeitet, als Slave-Station für die besagte gemeinsame Wellenlänge bezeichnet wird, wobei die besagten Synchronisationssignale von der besagten Master-Station an die besagten Slave-Stationen übertragen werden.

5. Verfahren nach einem der Ansprüche 1 bis 4, **dadurch gekennzeichnet, dass** das besagte Synchronisationssignal ein dediziertes Paket ist.

6. Kommunikationsstation (4-i) für ein optisches Netzwerk (N), wobei die besagte Station dazu geeignet ist, Pakete mit optischen Signalen, die von mindestens einer gemeinsamen Wellenlänge und gemäß einer gemeinsamen Ausbreitungsrichtung transportiert werden, zwischen von mindestens einer anderen, stromaufwärts gelegenen Station ausgegebenen Durchgangspaketen temporal in eine optische Faser (2) einzufügen, **dadurch gekennzeichnet, dass** sie umfasst: i) Optische Detektionsmittel (17), welcher dazu geeignet sind, den mit der besagten Wellenlänge assoziierten Verkehr in der besagten optischen Faser (2) zu beobachten, um Detektionssignale auszugeben, welche für das Nichtvorhandensein von Paketen gemäß der besagten Wellenlänge während einer Dauer, die einen gewählten Grenzwert der Dauer (DS) überschreitet, repräsentativ sind, und ii) Steuermittel (11), welche dazu ausgelegt sind, im Fall des Empfangs eines Detektionssignals nach dem Empfang eines Synchronisationssignals, welches für den Anfang mindestens einer Sendesitzung einer gewählten Dauer (T) repräsentativ ist, die zwischen dem Ende des letzten Durchgangspakets während einer laufenden Sitzung und dem Ende der laufenden Sitzung verbleibende Dauer (DR) zu ermitteln und anschließend das Einfügen eines auf eine Übertragung wartenden Pakets in die besagte optische Faser (2) zuzulassen, wenn die besagte verbleibende Dauer (DR) größer ist als die für das Einfügen des auf eine Übertragung wartenden Pakets in die optische Faser (2) erforderliche Dauer, und dass sie Sendemittel (12) umfasst, welche optisch an die besagte optische Faser (2) gekoppelt sind, um in diese, auf Anweisung der besagten Steuermittel (11), ein auf die Übertragung wartendes Paket einzufügen, wobei das besagte Einfügen nach einem Zeitintervall (IT), berechnet ab dem Ende des letzten Durchgangspakets, welches unter dem besagten Grenzwert der Dauer (DS) liegt, beginnt.

7. Station nach Anspruch 6, **dadurch gekennzeichnet, dass** die besagten Steuermittel (11) dazu ausgelegt sind, einen internen Taktgeber ihrer Station gemäß jedem Synchronisationssignal zu synchronisieren und von einem Synchronisationssignal das Ende einer Sendesitzung abzuleiten.

8. Station nach einem der Ansprüche 6 und 7, wobei eine besagte Station (4-1), welche im Verhältnis zu der besagten Ausbreitungsrichtung am weitesten stromaufwärts gelegen ist und Pakete gemäß der besagten gemeinsamen Wellenlänge aussendet, für diese Wellenlänge als Master-Station bezeichnet wird, während jede andere besagte Station, welche gemäß dieser gemeinsamen Wellenlänge arbeitet, demzufolge für die besagte gemeinsame Wellenlänge als Slave-Station bezeichnet wird, **dadurch gekennzeichnet, dass** die besagte Station, wenn sie die Master-Station ist, Synchronisationsmittel (21) umfasst, welche für die Verwaltung des Sendens der besagten Synchronisationssignale an die besagten Slave-Stationen ausgelegt sind.

9. Station nach Anspruch 8, **dadurch gekennzeichnet, dass** die besagten Synchronisationsmittel (21) dazu ausgelegt sind, die besagten Synchronisationssignale periodisch auszusenden, wobei die besagte Periode (T') gleich n-mal die Dauer (T) einer Sendesitzung ist, wobei n ganzzahlig und gleich oder größer als eins ist.

10. Station nach einem der Ansprüche 8 und 9, **dadurch gekennzeichnet, dass** die besagten Synchronisationsmittel (21) dazu ausgelegt sind, die besagten Synchronisationssignale in der Form von dedizierten Paketen auszusenden.

11. Station nach einem der Ansprüche 6 und 10, **dadurch gekennzeichnet, dass** sie eine optische Verzögerungsleitung (19) umfasst, welche an die besagte optische Faser (2) zwischen den besagten Detektionsmitteln (17) und den besagten Sendemitteln (12) optisch gekoppelt ist.

12. Optisches Ringnetzwerk (N), **dadurch gekennzeichnet, dass** es einen Zugangsknoten (1) und mindestens zwei Stationen (4-i) gemäß einem der Ansprüche 6 bis 11, welche an mindestens eine optische Faser (2) gekoppelt sind, umfasst.
